# EUROPEAN PATENT SPECIFICATION

(11) **EP 4 439 317 B1**
(45) Date of publication and mention of the grant of the patent: **18.02.2026**
(21) Application number: 24167453.0
(22) Date of filing: 28.03.2024
(51) Int. Cl.: G06F 13/20, G06F 13/40, G06F 13/42, H04L 12/40, H04L 12/403, G06F 12/06, H04L 61/5038

(54) **COMMUNICATION SYSTEM AND COMMUNICATION METHOD**
KOMMUNIKATIONSSYSTEM UND KOMMUNIKATIONSVERFAHREN
SYSTÈME DE COMMUNICATION ET PROCÉDÉ DE COMMUNICATION

(30) Priority: 31.03.2023 CN 202310342521
(43) Date of publication of application: 02.10.2024
(73) Proprietor: Silergy Semiconductor Technology (Hangzhou) Ltd, Hangzhou City, Zhejiang 310051 (CN)
(72) Inventor: YANG, Yuanyu, Hangzhou City, 310051 (CN); XU, Xiaoqiang, Hangzhou City, 310051 (CN); ZHANG, Zongquan, Hangzhou City, 310051 (CN)
(74) Representative: Viering, Jentschura & Partner mbB Patent- und Rechtsanwälte

(56) References cited:
- EP-A1- 2 778 941
- US-A1- 2022 188 257
- US-B1- 6 255 973

## Description

### Field of the invention

The present disclosure relates to a technical field of communication, and particularly relates a communication system and a communication method.

### Background of the invention

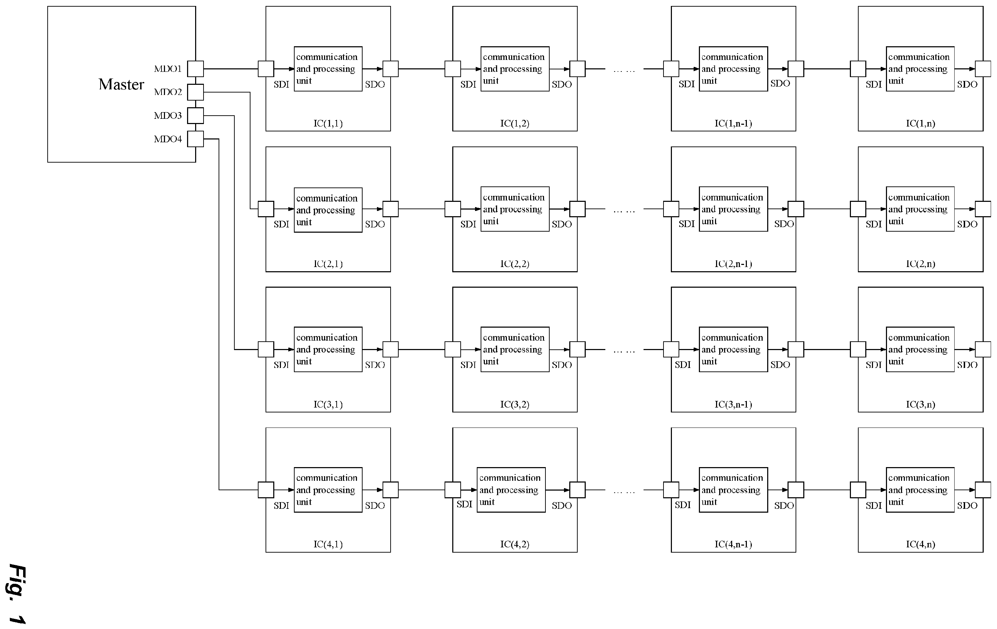

Communication is often needed between the master device and a plurality of slave devices. In order to avoid the conflicts of the plurality of slave devices during communication, each slave device requires an only address. As shown in Fig. 1, a circuit schematic diagram of a communication system in conventional technology is disclosed. As shown in Fig. 1, the communication system includes the master device Master and four columns of the same slave devices, and each column includes a plurality of slave devices which are serially connected. The four output ports MDO1~MDO4 of the master device Master are respectively connected to the first slave device in each column to distinguish different columns, then the master device Master transmits commands to the slave devices in different columns.

In the conventional technology, the number of the output ports of the master device Master are the same as the number of the columns of the slave devices. The more columns, the more output ports of the master device Master needs, so the application cost of the communication system can be increased. Hence, it is necessary to provide a communication system which can reduce the number of the output ports of the master device Master under the case that the number of the columns of the slave devices stays unchanged so that the columns of slave devices may be distinguished by one output ports of master device Master, thereby decreasing the application cost of the communication system.

US 6 255 973 B1 discloses a system for providing addresses to each one of a plurality of addressable integrated circuits. The system includes a plurality of address select circuits, each one thereof being coupled to a corresponding one of a corresponding plurality of addressable integrated circuit. Each one of such integrated circuits has an address select pin adapted to receive a signal from the corresponding one of the address select circuits. The signal is indicative of an address for such one of the plurality of addressable integrated circuits. Each one of such address circuit includes a signal source connected to the pin and a circuit for coding such signal source into a selected one of more than three predetermined signal levels. The integrated circuit includes a converter for converting such selected one of the signal levels into a address signal for such one of the integrated circuits during an initial address select mode and for providing conversion of a second signal in the integrated circuit for use by such integrated circuit in processing the second signal fed to such integrated circuit during a subsequent normal operating mode. In one embodiment the converter is an analog to digital converter. The other signal is indicative of temperature. A register is provided for storing the address signal for such one of the integrated circuits.

Further prior art is disclosed in, for example, US 2022/188257 A1 and EP 2 778 941 A1.

### Summary of the invention

The present invention and its preferred embodiments are defined in the appended claims.

In light of the aforementioned drawbacks, the present disclosure provides a communication system and a communication method which may reduce the number of output ports of the master device under the case that the number of the columns of the slave devices stays unchanged.

The embodiment of the present disclosure provides a communication system including a master device and at least two communication channels. Each communication channel includes at least one chip coupled in series. Each chip includes a communication input pin, a communication output pin, and at least one addressing pin. The first chip in each communication channel is connected to the corresponding output port of the master device. Connections of the addressing pin in the chip include one of floating, coupling with the communication input pin of the chip and coupling with the communication output pin of the chip. The master device is configured to identify each communication channel according to level information of each addressing pin of at least first chip in each communication channel.

The addressing pins of the at least first chip in different communication channels perform different connections so that each connection of the addressing pin of the at least first chip in each communication channel corresponds to one column address of the corresponding communication channel.

Optionally, the connections of the addressing pin of the chip includes at least three of coupling with a power supply terminal, coupling with a ground terminal, coupling with the communication input pin of the chip, coupling with the communication output pin of the chip, and floating.

Optionally, the addressing pins of the all chips in the same communication channel perform same connection, and the addressing pins of the chips in the different communication channels perform different connections.

Optionally, the addressing pins of the first chips in the different communication channels perform different connections.

Optionally, the addressing pins of the second chip to the last chip in the all communication channels perform same connection.

Optionally, the addressing pins of the second chip to the last chip in the all communication channels perform arbitrary connections.

Optionally, the master device transmits an address configuration command, and each chip in the communication channel when receiving the address configuration command serves as a current chip. In each communication channel, the current chip receives the address configuration command from the master device or the previous chip to enter an address configuration time interval and transmits the address configuration command to the next chip. Each chip in the address configuration time interval obtains a column address of the chip according to the connection of each addressing pin of the chip.

Optionally, the master device transmits an address configuration command. The first chip in each communication channel receives the address configuration command from the master device to enter an address configuration time interval. The first chip in the address configuration time interval obtains a column address of the first chip according to the connection of each addressing pin of the first chip.

Optionally, the master device transmits a communication data packet including column address data and row address data, and each chip in the communication channel when receiving the communication data packet serves as a current chip. In each communication channel, the current chip receives the communication data packet from the master device or the previous chip and respectively compares the column address data and the row address data in the communication data packet received by the current chip with the column address and the row address of the current chip. When the column address data and the row address data are respectively consistent with the column address and the row address, the current chip serves as a target chip in the communication and implements corresponding commands in the communication data packet. When the column address data is inconsistent with the column address and/or the row address data is inconsistent with the row address, the current chip forwards the communication data packet received by the current chip to the next chip, and the current chip does not modify the column address data in the communication data packet received by the current chip.

Optionally, the master device transmits a communication data packet including column address data and row address data, and each chip in the communication channel when receiving the communication data packet serves as a current chip. In each communication channel, the current chip receives the communication data packet from the master device or a previous chip and respectively compares the column address data and the row address data in the communication data packet received by the current chip with the column address and the row address of the current chip. When the column address data and the row address data are respectively consistent with the column address and the row address, the current chip serves as a target chip in the communication and implements corresponding commands in the communication data packet. When the column address data is inconsistent with the column address and/or the row address data is inconsistent with the row address, the current chip modifies the column address data in the communication data packet received by the current chip and forwards the modified communication data packet to the next chip.

Optionally, when the coding of the column addresses the second chip to the last chip in the all communication channels is 0, the calculation method of modifying the column address data performed by the current chip includes: the current chip subtracts the column address of the current chip from the column address data in the communication data packet received by the current chip, or the current chip subtracts the column address data in the communication data packet received by the current chip from the column address of the current chip.

Optionally, when the coding of the column addresses the second chip to the last chip in the all communication channels is 0, the calculation method of modifying the column address data performed by the current chip includes: the current chip performs XOR on the column address data in the communication data packet received by the current chip and the column address of the current chip.

Optionally, the master device transmits a communication data packet including column address data and row address data. The first chip in each communication channel receives the communication data packet transmitted by the master device and compares the column address data in the communication data packet with the column address of the first chip, and the communication channel serves as a current communication channel when the first chip of the communication channel receives the communication data packet. When the column address data is consistent with the column address, the current communication channel serves as a target communication channel in the communication and addressing of the row address is performed on the chips in the target communication channel according to the row address data in the communication data packet. When the column address data is inconsistent with the column address, the current communication channel does not serve as the target communication channel in the communication and the first chip in the current communication channel does not forward the communication data packet to the next chip.

The embodiment of the present disclosure provides a communication method for a communication system including a master device and at least two communication channels. Each channel includes at least one chip coupled in series, and each chip includes a communication input pin, a communication output pin, and at least one addressing pin. The communication method includes: transmitting an address configuration command by the master device; receiving the address configuration command by at least first chip in each communication channel to enter an address configuration time interval; in the address configuration time interval, encoding a column address of the chip by the at least one first chip in each communication channel according to level information of each addressing pin of the chip, wherein connections of the addressing pin in the chip includes one of floating, coupling with the communication input pin of the chip and coupling with the communication output pin of the chip, and wherein the addressing pins of the at least one first chip in each communication channel perform different connections so that level information of the addressing pin of the at least first chip in each communication channel corresponds to one column address of the corresponding communication channel; and transmitting a communication data packet and identifying each communication channel according to the column address of the at least one first chip in each communication channel by the master device.

The connections of the addressing pin of the chip includes at least three of coupling with a power supply terminal, coupling with a ground terminal, coupling with the communication input pin of the chip, coupling with the communication output pin of the chip, and floating.

Optionally, the addressing pins of the all chips in the same communication channel perform same connection, and the addressing pins of the chips in the different communication channels perform different connection.

Optionally, the addressing pins of the first chips in the different communication channels perform different connection, and the addressing pins of the second chip to the last chip in the all communication channels perform same connection.

Optionally, the addressing pins of the first chips in the different communication channels perform different connections, and the addressing pins of the second chip to the last chip in the all communication channels perform arbitrary connections.

Optionally, the communication method further includes: transmitting a communication data packet including column address data and row address data by the master device, wherein each chip in the communication channel when receiving the communication data packet serves as a current chip; receiving the communication data packet from the master device or the previous chip and respectively comparing the column address data and the row address data in the communication data packet received by the current chip with the column address and the row address of the current chip by the current chip in each communication channel; when the column address data and the row address data are respectively consistent with the column address and the row address, regarding the current chip as a target chip in the communication and implementing corresponding commands in the communication data packet by the target chip; when the column address data is inconsistent with the column address and/or the row address data is inconsistent with the row address, forwarding the communication data packet received by the current chip to the next chip by the current chip, wherein the current chip does not modify the column address data in the communication data packet received by the current chip.

Optionally, the communication method further includes: transmitting a communication data packet including column address data and row address data by the master device, wherein each chip in the communication channel when receiving the communication data packet serves as a current chip; receiving the communication data packet from the master device or the previous chip and respectively comparing the column address data and the row address data in the communication data packet received by the current chip with the column address and the row address of the current chip by the current chip in each communication channel; when the column address data and the row address data are respectively consistent with the column address and the row address, regarding the current chip as a target chip in the communication and implementing corresponding commands in the communication data packet by the target chip; when the column address data is inconsistent with the column address and/or the row address data is inconsistent with the row address, modifying the column address data in the communication data packet received by the current chip and forwarding the modified communication data packet to the next chip by the current chip.

Optionally, when the coding of the column addresses the second chip to the last chip in the all communication channels are 0, the calculation method of modifying the column address data performed by the current chip includes: subtracting the column address of the current chip from the column address data in the communication data packet received by the current chip or subtracting the column address data in the communication data packet received by the current chip from the column address of the current chip by the current chip or performing XOR on the column address data in the communication data packet received by the current chip and the column address of the current chip by the current chip.

Optionally, the communication method further includes: transmitting a communication data packet including column address data and row address data by the master device; receiving the communication data packet transmitted by the master device and comparing the column address data in the communication data packet with the column address of the first chip by the first chip in each communication channel, wherein the communication channel serves as a current communication channel when the first chip of the communication channel receives the communication data packet; when the column address data is consistent with the column address, regarding the current communication channel as a target communication channel in the communication, and performing the row address addressing on the chips in the target communication channel according to the row address data in the communication data packet by the first chip; when the column address data is inconsistent with the column address, not regarding the current communication channel as the target communication channel in the communication and not forwarding the communication data packet to the next chip by the first chip in the current communication channel.

Optionally, the communication method further includes: in the address configuration time interval, receiving a PWM signal by the communication input pin or the communication output pin of the chip to identify the connection that the addressing pin is coupled with the communication input pin or the communication output pin.

The embodiment of the present disclosure discloses a communication system including a master device and at least two communication channels. Each communication channel includes at least one serially connected chip. Each chip includes a communication input pin, a communication output pin, and at least one addressing pin. The output port of the first chip in each communication channel is connected to the corresponding output port of the master device. The connection of the addressing pin in the chip includes one of floating, coupling to the communication input pin of the chip and coupling to the communication output pin of the chip. The master device distinguishes each communication channel according to the connection of the addressing pin of at least one first chip in each communication channel. In comparison with the conventional technology, the communication system of the present disclosure has the following advantages: the column addresses of the chips expand without increasing the addressing pin of the chip, and when the number of the columns of the chips ensures, the number of the addressing pins of the chips is saved, and the encapsulation costs of the chips and the complexity of the PCB layout are reduced, thereby saving the port resources of the master device.

### The drawings

The above and other objects, features, and advantages of the present disclosure will be clearer by referring to the accompanying drawings for the following detailed description of the embodiments of the present disclosure, in which:
Fig. 1 is the circuit schematic diagram of the communication system in the prior art.
Fig. 2 is a circuit schematic diagram of a communication system according to a first embodiment of the present disclosure.
Fig. 3 is a circuit schematic diagram of a communication system according to a second embodiment of the present disclosure.

### Detailed description

The following describes the present disclosure based on the embodiments, but the present disclosure is not merely limited to these embodiments. The detailed descriptions of the present disclosure in the following elaborate on some specific details. Those skilled in the art can fully understand the present disclosure without the description of these details. Well-known methods, procedures, processes, components and circuits are not described in detail to avoid obscuring the essence of the present disclosure.

In addition, the person skilled in the art should understand that the accompanying drawings are only for the purpose of illustration and are not drawn to scale.

At the same time, it should be understood that "circuit" in the following description refers to a conducting loop formed by at least one component or sub-circuit through electrical connection or electromagnetic connection. When a component or a circuit is referred to as being "connected" to another component or the component/circuit is referred to as being "connected" between two nodes, it may be directly coupled or connected to another component or intervening component(s) may be present. The connection between the components may be physical, logical, or a combination thereof. On the contrary, when a component is referred to as being "directly coupled" or "directly connected" to another component, it is meant that there are no intervening component(s) present therebetween.

Unless otherwise required by the context, the terms "comprise", "include" and the like used in the whole description herein and throughout the claims should be interpreted as inclusive meaning rather than exclusive or exhaustive meaning. In other words, the terms "comprise", "include" and the like used in the whole description herein and throughout the claims should be interpreted as meaning of "including but be not limited to."

In the description of the present disclosure, it should be understood that the terms "first", "second" and the like are only used for the purpose of explanation and should not be construed as indicating or implying relative importance. Additionally, in the description of the present disclosure, "plural" means two or more unless otherwise specified.

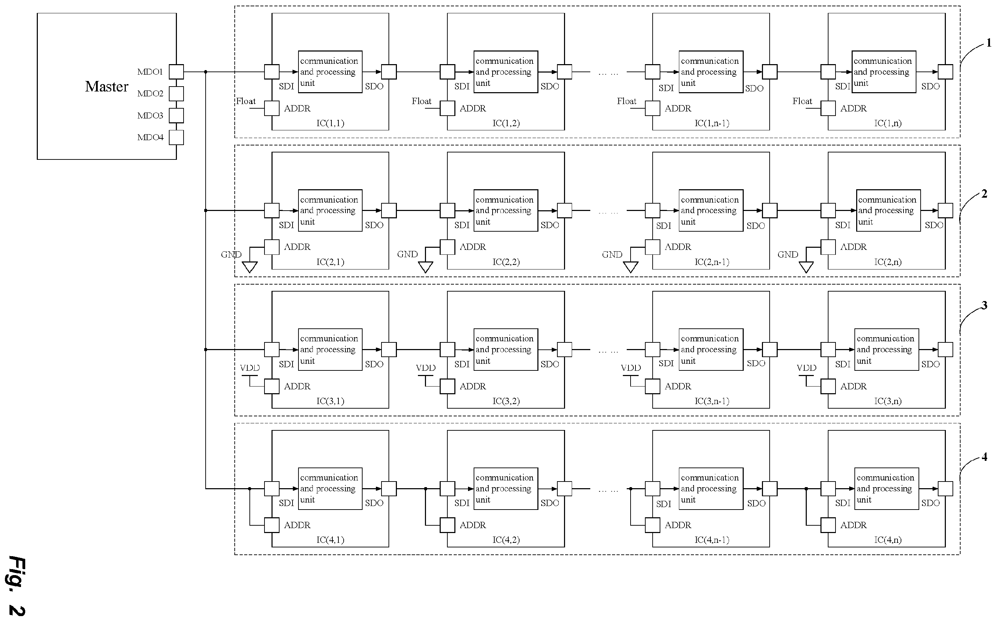

Fig. 2 is a circuit schematic diagram of a communication system according to a first embodiment of the present disclosure. In Fig. 2, the communication system includes a master device Master and four communication channels 1~4. Each communication channel includes n chips connected in serial, and n is greater than or equal to 1. Specifically, the ith communication channel includes n chips IC(i,j) connected in serial, wherein i=1,2,3,4, and 1≤j≤n, and each chip includes a communication input pin SDI, a communication output pin SDO, and an addressing pin ADDR. The communication input pin SDI of the first chip IC(i,1) in each communication channel is connected to the output port MDO1 of the master device Master. The communication input pins SDI of the second chip IC(i,2) to the nth chip IC(i,n) in each communication channel are respectively connected to the communication output pins SDO of the first chip IC(i,1) to the (n-1)th chip IC(i,n-1). Specifically, the communication input pin SDI of the second chip IC(i,2) is connected to the communication output pin SDO of the first chip IC(i,1), the communication input pin SDI of the third chip IC(i,3) is connected to the communication output pin SDO of the second chip IC(i,2), and so on, the communication input pin SDI of the nth chip IC(i,n) is connected to the communication output pin SDO of the (n-1)th chip IC(i,n-1). In the present embodiment, the communication output pin SDO of the nth chip IC(i,n) is not connected to the input port MDI (not shown in Fig. 2) of the master device Master, and there is no need to form a circular serial communication system as long as the communication system can implement unidirectional data transmission. In another embodiment, the communication output pin SDO of the nth chip IC(i,n) is connected to the input port MDI (not shown in Fig. 2) of the master device Master to form the circular serial communication system, and the present disclosure is not limited to this. Furthermore, each chip further includes a communication and processing unit, and the communication and processing unit is configured to forward a communication data packet or a command received from the chip, or process the communication data packet or the command and forward the processed communication data packet or the processed command, and the processing of the communication data packet includes modifying the associated data in the communication data packet. In the present embodiment, each communication channel includes n chip connected in serial, but the present disclosure is not limited to this. It should be understood that the number of the chips included in each communication channel may be different or the same is within the protection scope of the present disclosure.

In the present embodiment, the addressing pins of the all chips in the same communication channel perform same connection, and the addressing pins of the chip in the different communication channels perform different connections so that each of connection of the addressing pin corresponds to one column address of the corresponding communication channel. The master device distinguishes each communication channel according to the connection of each addressing pin of at least one chip in each communication channel.

The connections of the addressing pin in the chip includes one of floating, coupling with the communication input pin of the chip, and coupling with the communication output pin of the chip. The connections of the addressing pin in the chip includes at least three of coupling with a power supply terminal, coupling with a ground terminal, coupling with the communication input pin of the chip, coupling with the communication output pin of the chip, and floating, thus three and more than three different signals may be inputted into the one addressing pin to encode three and more than three column addresses. In the present embodiment, the addressing pins of all chips in the first communication channel 1 are floating so that the column addresses of all chips in the first communication channel 1 are encoded as column address 1, such as 00; the addressing pins of all chips in the second communication channel 2 are connected to the ground terminal GND so that the column addresses of all chips in the second communication channel 2 are encoded as column address 2, such as 01. It should be understood that the ground terminal GND herein may be the ground terminal of the chip or be the ground terminal of the other apparatus outside the chip, and the present disclosure is not limited this. The addressing pins of all chips in the third communication channel 3 are connected to the power supply terminal VDD of the chip so that the column addresses of all chips in the third communication channel 3 are encoded as column address 3, such as 10. It should be understood that the power supply terminal VDD herein may be the power supply terminal of the chip or be the power supply terminal of the other apparatus outside the chip. In an address configuration time interval, the communication input pin of the chip receives a PWM signal (i.e., there is a signal with the high level and the low level) to be configured to detect the connection that the addressing pin is coupled with the communication input pin of the chip. The addressing pins of all chips in the fourth communication channel 4 are connected to the communication input pin SDI of the chip so that the column addresses of all chips in the fourth communication channel 4 are encoded as column address 4, such as 11. In the other embodiment, the communication input pin may be replaced by the communication output pin or another alternative pin.

Specifically, the chip further includes an address extension circuit, and the core of the address extension circuit is to identify several different level information of the addressing pin corresponding to the different connections of the addressing pin of the chip to judge the connection of each addressing pin, thereby configuring and encoding the column address of the chip. When identifying that the level information is a high fixed level state, judging that the addressing pin is being in the high-level state (i.e., the addressing pin is coupled with the power supply terminal); When identifying that the level information is a low fixed level state, judging that the addressing pin is being in the low-level state (i.e., the addressing pin is coupled with the ground terminal); when identifying that the level information can change according to the change of the level state inside the chip, judging that the addressing pin is floating; when identifying that the level information is equivalent to the PWM signal received by the address pin, and the PWM signal presents high and low level states within a certain time interval, judging that the addressing pin is coupled with the communication input pin, the communication output pin or other substitute pins of the chip. After judging the connection of each addressing pin, the address extension circuit can perform different column address coding according to different connections of the addressing pin. Any address extension circuit that identifies several different level information of the addressing pin to judge the connection of the addressing pin and performs column address coding of the chip is within the scope of the present invention.

Furthermore, when the method of the embodiment in the present invention is used to configure the column addresses and one chip has N addressing pins, the at most 4^{N} column addresses can be configured, therefore, the column addresses of the chip expand without increasing the addressing pin.

When the embodiment of the present disclosure exemplarily reveals that the number of the communication channels is four, the connection of the all chips in each communication channel is the same, thus each addressing pin of the chips in the four communication channels have four connections, and the present disclosure does not limit the number of the communication channels. When the number of the communication channels increases, the connections of the addressing pin of the chips in the communication channels correspondingly increase or the number of the addressing pins of the chip correspondingly increases. When the number of the communication channels decreases, the connections of the addressing pins of the chips in the communication channels correspondingly decrease or the number of the addressing pins of the chip correspondingly decreases. And it should be noted that the four connections of the addressing pins in the present disclosure are exemplary. In another embodiment, the connections of the addressing pin further includes coupling with the communication output pin SDO of the chip or making arbitrary connections, and the present disclosure is not limited to this, and any method of distinguishing different communication channels according to the different connections of the addressing pins is within the protection scope of the present disclosure. Furthermore, the communication is a one-wire communication, in another embodiment, which is not within the scope of the claims, the communication may be I²C communication or the other well-known or unknown communication, and the present disclosure is not limited to this.

When the communication system in the present embodiment is used to communicate, the first communication method includes the following steps.

The master device Master transmits an address configuration command, and each chip in the communication channel when receiving the address configuration command or the communication data packet serves as a current chip.

In each communication channel, the current chip (e.g., the third chip IC (1,3) in the first communication channel 1) receives the address configuration command from the master device or the last chip (e.g., the second chip IC(1,2) in the first communication channel 1) to enter an address configuration time interval and transmits the address configuration command to the next chip.

In the address configuration time interval, each chip encodes the column address of the chip according to the connection of each addressing pin of the chip; wherein in the address configuration time interval, the communication input pin of the chip receives the PWM signal, i.e., a signal with the high level and low level, so that the chip detects the connection that the addressing pin of the chip is coupled to the communication input pin of the chip itself.

The master device transmits a communication data packet including column address data and row address data. It should be noted that the column address data in the present disclosure is configured to distinguish different communication channels and the row address data in the present disclosure is configured to distinguish the positions of the chips in the particular communication channel. The row address data transmitted by the master device in the present disclosure indicates the data associated with the row address, and may be specific row address or the initial value of the row address. The type of the row address data transmitted by the master device is related to the addressing mode of the row address in the communication, and the present disclosure does not limit the type of the row address data. In the following description, the column address data and row address data in the communication data packet are the same as the aforementioned description and may not be repeated again.

In each communication channel, the communication input pin SDI of the current chip receives the communication data packet from the master device or the last chip and compares the column address data and the row address data in the received communication data packet with the column address and the row address of the current chip, respectively. It should be noted that the row address of the chip similarly indicates the data associated with the row address, and may be specific row address or the associated particular data configured to ensure the row address. The type of the row address of the chip is related to the addressing mode of the row address in the communication, and the present disclosure does not limit the type of the row address data. In the following description, the row address of the chip are the same as the aforementioned description and may not be repeated again.

When the column address data and the row address data are consistent with the column address and the row address, respectively, the current chip serves as the target chip in the communication and implements corresponding commands in the communication data packet. In one embodiment, when the current chip serves as the target chip in the communication, the current chip does not transmit the communication data packet to the next chip. In another embodiment, when the current chip serves as the target chip in the communication, the communication data packet is still transmitted, namely that the current chip forwards the communication data packet to the next chip, and the present disclosure is not limited to this.

When the column address data is inconsistent with the column address and/or the row address data is inconsistent with the row address, the current chip forwards the communication data packet to the next chip, and the current chip does not modify the column address data in the communication data packet. It should be understood that the other part in the communication data packet may be or not be modified, and the present disclosure is not limited to this. In one embodiment, the current chip modifies the row address data in the communication data packet. In another embodiment, the current chip does not modify the row address data in the communication data packet. Whether the current chip modifies the row address data in the communication data packet is related to the addressing mode of the row address in the communication.

When the communication system in the present embodiment is used to communicate, the second communication method includes the following steps. In the second communication method, only the first chip in each communication channel is required to detect the connection of each addressing pin of the first chip to perform addressing initialization, thus encoding the column address of the first chip, and other chips in each communication channel do not need to detect the connection of each addressing pin thereof.

The master device transmits the address configuration command.

The first chip in each communication channel receives the address configuration command from the master device to enter the address configuration time interval.

In the address configuration time interval, the first chip encodes the column address of the first chip according to the connection of each addressing pin of the first chip. Wherein in the address configuration time interval, the communication input pin of the first chip receives the PWM signal, i.e., a signal with high level and low level, so that the first chip detects the connection that the addressing pin of the first chip is coupled with the communication input pin of the first chip.

The master device transmits the communication data packet including the column address data and the row address data.

In each communication channel, the communication input pin SDI of the first chip receives the communication data packet transmitted by the master device and compares the column address data in the received communication data packet with the column address of the first chip, and the communication channel serves as a current communication channel when the first chip of the communication channel receives the communication data packet.

When the column address data is consistent with the column address, the current communication channel serves as the target communication channel in the communication, then the target chip is identified in the target communication channel according to the row address data in the communication data packet. Each chip in the current communication channel when receiving the communication data packet serves as the current chip. The current chip compares the row address data in the received communication data packet with the row address of the current chip to identify whether the current is the target chip. Specifically, when the row address data is consistent with the row address of the current chip, the current chip serves as the target chip in the communication and implements the corresponding commands in the communication data packet and continues to forward or does not continue to forward the communication data packet to the next chip in the current communication channel. When the row address data is inconsistent with the row address, the current chip forwards the communication data packet to the next chip in the current communication channel.

When the column address data is inconsistent with the column address, the current communication channel does not serve as the target communication channel in the communication, and the first chip does not forward the communication data packet to the next chip in the current communication channel, and in other words, the communication output pin SDO of the first chip in the current communication channel does not output any signal.

In the present embodiment, the connection of the addressing pins of the n chips in the same communication channel is same, and the connections of the addressing pins of the chip in the different communication channels are different. In actual situations, each communication channel is made into one circuit board, and the layouts of the circuit boards (i.e., PCB or an aluminum substrate) of the four communication channels are different and can be not unified. When it is necessary to distinguish the four communication channels, the four different communication channels should be made into four different circuit boards. Hence, the present disclosure demonstrates the second embodiment to solve the aforementioned problem.

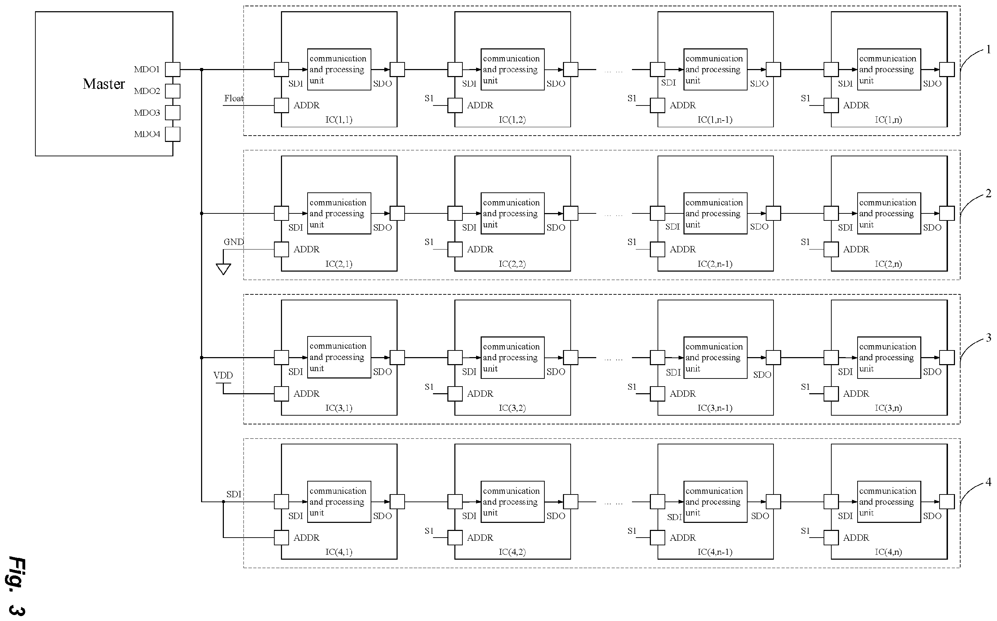

Fig. 3 is a circuit schematic diagram of a communication system according to a second embodiment of the present disclosure. The difference between the embodiment shown in Fig. 3 and the embodiment shown in Fig. 2 is: the addressing pins of the first chips in the different communication channels perform different connections, and the master device identifies each communication channel according to the different connections of the addressing pins ADDR of the first chips in the different communication channels.

In one embodiment, the addressing pins of the second chip to the last chip in the all communication channels are coupled to S1, which represents that the same connection is performed, i.e., the addressing pins of the first chips in the different communication channels perform different connections, and the addressing pins of the second chip to the last chip in the all communication channels perform the same connection, wherein S1 represents any connection point including no connection point. In the present embodiment, each communication channel is manufactured as one circuit board, and the addressing pin of the first chip in each communication channel is brought out by the leads of the respective circuit board and is connected to the outside of the respective circuit board or the other circuit board by collaborating with corresponding inserting component to perform different connections on the outside of the respective circuit board or the other circuit board. Therefore, the circuit boards (i.e., PCB or an aluminum substrate) of the four communication channels are the same and universal. When the four communication channels are distinguished, the column address is encoded according to the connection of the signal line led out to the other circuit board from the addressing pin of the first chip in each communication channel. In one embodiment, the different column address configuration is set according to the connection of the signal line led out a master board from the addressing pin of the first chip in each communication channel.

When the communication system in the present embodiment is used to communicate, the third communication method includes the following steps.

The master device transmits the address configuration command, and each chip in the communication channel when receiving the address configuration command or the communication data packet serves as the current chip.

In each communication channel, the current chip receives the address configuration command from the master device or the last chip to enter the address configuration time interval and transmits the address configuration command to the next chip.

In the address configuration time interval, each chip encodes the column address of the chip according to the connection of each addressing pin of the chip. Wherein, in the address configuration time interval, the communication input pin of the chip receives the PWM signal so that the chip detects the connection that the addressing pin of the chip is coupled with the communication input pin of the chip.

The master device transmits the communication data packet including the column address data and the row address data.

In each communication channel, the current chip receives the communication data packet from the master device or the last chip and compares the column address data and the row address data in the received communication data packet with the column address and the row address of the current chip, respectively.

When the column address data and the row address data are consistent with the column address and the row address, respectively, the current chip serves as the target chip in the communication and implements corresponding commands in the communication data packet. In one embodiment, when the current chip serves as the target chip in the communication, the current chip does not transmit or forward the communication data packet to the next chip. In another embodiment, when the current chip serves as the target chip in the communication, the communication data packet is still transmitted or forwarded by the current chip, i.e., the current chip modifies the column address in the communication data packet and forwards the modified communication data packet to the next chip, and the present disclosure is not limited to this.

When the column address data is inconsistent with the column address and/or the row address data is inconsistent with the row address, the current chip modifies the column address in the communication data packet and forwards the modified communication data packet to the next chip. It should be understood that the other part in the communication data packet may be or not be modified, and the present disclosure is not limited to this. The row address data in the communication data packet may be or not be modified, which is related to the addressing mode of the row address, and the present disclosure is not limited thereto.

In one embodiment, when the coding of the column addresses of the second chip to the last chip in the all communication channels are 0 (may be 00 or 0000), the calculation method of modifying the column address data performed by the current chip includes: the current chip subtracts the column address of the current chip from the column address data in the received communication data packet or subtracts the column address data in the received communication data packet from the column address of the current chip.

In one embodiment, when the coding of the column addresses the second chip to the last chip in the all communication channels are 0 (may be 00 or 0000), the calculation method of modifying the column address data performed by the current chip includes: the current chip performs XOR on the column address data in the received communication data packet and the column address of the current chip.

The aforementioned description schematically demonstrates the calculation method of modifying the column address data when the coding of the column addresses of the second chip to the last chip in the all communication channels are 0, and the present disclosure is not limited to this. The coding of the column addresses the second chip to the last chip in the all communication channels may be not 0, and any calculation method of modifying the column address data can guarantee that the column addresses of the second chip to the last chip in the communication channel are all selected when the column address of the first chip in the communication channel is selected, and the column addresses of the second chip to the last chip in the communication channel are not selected when the column address of the first chip in the communication channel is not selected is within the protection scope of the present disclosure. When the column address data in the received communication data packet is consistent with the column address of the chip, the column address of the chip is selected.

It should be understood that the communication system in the present embodiment may utilize the aforementioned second communication method to communicate.

In another embodiment, the addressing pins of the second chip to the last chip in the all communication channels are coupled to S1, which represents arbitrary connections, and in other words, the addressing pins of the second chip to the last chip in the all communication channels make arbitrary connections such as one of the aforementioned connections. It should be understood that the communication system in the present embodiment may utilize the aforementioned second communication method to communicate.

In the above first, second and three communication methods, the addressing mode of the row address in each communication channel may be any well-known addressing method of the row address, and includes the addressing mode of initializing the row address and not initializing the row address, and the present disclosure is not limited to this.

Although the above description separately describes and elaborates the embodiments, a person having ordinary skill in the art may substitute and integrate the common technical features among embodiments, and the content which one embodiment does not clearly record may refer to another embodiment with the content not recorded by the one embodiment.

List of reference signs:
1~4: communication channels
ADDR: addressing pin
GND: ground terminal
IC(1,1)~IC(4,n): chip
Master: master device
MDO1~MDO4: output ports
SDI: communication input pin
SDO: communication output pin
VDD: power supply terminal

## Claims

1. A communication system, the communication system comprising:
at least two communication channels (1~4), each of which comprises at least two chips (IC(1,1)~IC(4,n)) coupled in series, wherein each chip (IC(1,1)~IC(4,n)) comprises a communication input pin (SDI), a communication output pin (SDO), and at least one addressing pin (ADDR), and connections of the addressing pin (ADDR) in the chip (IC(1,1)~IC(4,n)) comprise one of floating, coupling with the communication input pin (SDI) of the chip (IC(1,1)~IC(4,n)) and coupling with the communication output pin (SDO) of the chip (IC(1,1)~IC(4,n)); and
a master device (Master), configured to identify each communication channel (1~4) according to level information of each addressing pin (ADDR) of at least first chip (IC(1,1), IC(2,1), IC(3,1), IC(4,1)) in each communication channel (1~4), wherein the addressing pins of the at least first chip (IC(1,1), IC(2,1), IC(3,1), IC(4,1)) in different communication channels (1~4) perform different connections so that each connection of the addressing pin (ADDR) of the at least first chip (IC(1,1), IC(2,1), IC(3,1), IC(4,1)) in each communication channel (1~4) corresponds to one column address of the corresponding communication channel (1~4), and wherein the first chip (IC(1,1), IC(2,1), IC(3,1), IC(4,1)) in each communication channel (1~4) is connected to a corresponding output port (MDO1~MDO4) of the master device (Master); wherein the master device and the at least two chips in each communication channels are connected in series by a one-wire communication.

2. The communication system according to claim 1, wherein the connections of the addressing pin (ADDR) of the chip (IC(1,1)~IC(4,n)) comprises at least three of coupling with a power supply terminal (VDD), coupling with a ground terminal (GND), coupling with the communication input pin (SDI) of the chip (IC(1,1)~IC(4,n)), coupling with the communication output pin (SDO) of the chip (IC(1,1)~IC(4,n)), and floating.

3. The communication system according to claim 1, wherein the addressing pins (ADDR) of the all chips (IC(1,1)~IC(4,n)) in the same communication channel (1~4) perform same connection, and the addressing pins (ADDR) of the chips (IC(1,1)~IC(4,n)) in the different communication channels (1~4) perform different connections.

4. The communication system according to claim 1, wherein the addressing pins (ADDR) of the first chips (IC(1,1), IC(2,1), IC(3,1),IC(4,1)) in the different communication channels (1~4) perform different connections.

5. The communication system according to claim 4, wherein the addressing pins (ADDR) of a second chip (IC(1,2), IC(2,2), IC(3,2),IC(4,2)) to a last chip (IC(1,n), IC(2,n), IC(3,n), IC(4,n)) in the all communication channels (1~4) perform same connection.

6. The communication system according to claim 4, wherein the addressing pins (ADDR) of a second chip (IC(1,2), IC(2,2), IC(3,2), IC(4,2)) to a last chip (IC(1,n), IC(2,n), IC(3,n), IC(4,n)) in the all communication channels (1~4) perform arbitrary connections.

7. The communication system according to any one of claim 1 to claim 5, wherein the communication system further comprises:
the master device (Master) transmits an address configuration command, and each chip (IC(1,1)~IC(4,n)) in the communication channel (1~4) when receiving the address configuration command serves as a current chip;
in each communication channel (1~4), the current chip receives the address configuration command from the master device (Master) or a previous chip to enter an address configuration time interval, and transmits the address configuration command to a next chip;
each chip (IC(1,1)~IC(4,n)) in the address configuration time interval obtains a column address of the chip according to the connection of each addressing pin (ADDR) of the chip (IC(1,1)~IC(4,n)).

8. The communication system according to any one of claim 1 to claim 6, wherein the communication system further comprises:
the master device (Master) transmits an address configuration command;
the first chip (IC(1,1), IC(2,1), IC(3,1), IC(4,1)) in each communication channel (1~4) receives the address configuration command from the master device (Master) to enter an address configuration time interval;
the first chip (IC(1,1), IC(2,1), IC(3,1), IC(4,1)) in the address configuration time interval obtains a column address of the first chip according to the connection of each addressing pin of the first chip (IC(1,1), IC(2,1), IC(3,1), IC(4,1)).

9. The communication system according to any one of claim 3, 7 and 8, wherein the communication system further comprises:
the master device (Master) transmits a communication data packet comprising column address data and row address data, and each chip (IC(1,1)~IC(4,n)) in the communication channel (1~4) when receiving the communication data packet serves as a current chip;
in each communication channel (1~4), the current chip receives the communication data packet from the master device (Master) or a previous chip, and respectively compares the column address data and the row address data in the communication data packet received by the current chip with the column address and a row address of the current chip;
when the column address data and the row address data are respectively consistent with the column address and the row address, the current chip serves as a target chip in the communication and implements corresponding commands in the communication data packet;
when the column address data is inconsistent with the column address and/or the row address data is inconsistent with the row address, the current chip forwards the communication data packet received by the current chip to a next chip, wherein the current chip does not modify the column address data in the communication data packet received by the current chip.

10. The communication system according to any one of claim 5, 7 and 8, wherein the communication system further comprises:
the master device (Master) transmits a communication data packet comprising column address data and row address data, and each chip (IC(1,1)~IC(4,n) in the communication channel (1~4) when receiving the communication data packet serves as a current chip;
in each communication channel (1~4), the current chip receives the communication data packet from the master device (Master) or a previous chip, and respectively compares the column address data and the row address data in the communication data packet received by the current chip with the column address and a row address of the current chip;
when the column address data and the row address data are respectively consistent with the column address and the row address, the current chip serves as a target chip in the communication and implements corresponding commands in the communication data packet;
when the column address data is inconsistent with the column address and/or the row address data is inconsistent with the row address, the current chip modifies the column address data in the communication data packet received by the current chip and forwards the modified communication data packet to a next chip.

11. The communication system according to claim 10, wherein when coding of the column addresses the second chip (IC(1,2), IC(2,2), IC(3,2), IC(4,2)) to the last chip (IC(1,n), IC(2,n), IC(3,n), IC(4,n)) in the all communication channels (1~4) is 0, a calculation method of modifying the column address data performed by the current chip comprises: the current chip subtracts the column address of the current chip from the column address data in the communication data packet received by the current chip, or the current chip subtracts the column address data in the communication data packet received by the current chip from the column address of the current chip.

12. The communication system according to claim 10, wherein when coding of the column addresses the second chip (IC(1,2), IC(2,2), IC(3,2), IC(4,2)) to the last chip (IC(1,n), IC(2,n), IC(3,n), IC(4,n)) in the all communication channels (1~4) is 0, a calculation method of modifying the column address data performed by the current chip comprises: the current chip performs XOR on the column address data in the communication data packet received by the current chip and the column address of the current chip.

13. The communication system according to any one of claim 3 to claim 8, wherein the communication system further comprises:
the master device (Master) transmits a communication data packet comprising column address data and row address data;
the first chip (IC(1,1), IC(2,1), IC(3,1), IC(4,1)) in each communication channel (1~4) receives the communication data packet transmitted by the master device (Master), and compares the column address data in the communication data packet with the column address of the first chip (IC(1,1), IC(2,1), IC(3,1), IC(4,1)), wherein the communication channel (1~4) serves as a current communication channel when the first chip of the communication channel receives the communication data packet;
when the column address data is consistent with the column address, the current communication channel serves as a target communication channel in the communication, and addressing of the row address is performed on the chips in the target communication channel according to the row address data in the communication data packet;
when the column address data is inconsistent with the column address, the current communication channel does not serve as the target communication channel in the communication, and the first chip (IC(1,1), IC(2,1), IC(3,1), IC(4,1)) in the current communication channel does not forward the communication data packet to the next chip.

14. A communication method for a communication system comprising a master device (Master) and at least two communication channels (1~4), wherein each channel (1~4) comprises at least two chips (IC(1,1)~IC(4,n) coupled in series, and each chip (IC(1,1)~IC(4,n) comprises a communication input pin (SDI), a communication output pin (SDO), and at least one addressing pin (ADDR), wherein the first chip (IC(1,1), IC(2,1), IC(3,1), IC(4,1)) in each communication channel (1~4) is connected to a corresponding output port (MD01~MD04) of the master device (Master),
the communication method comprising:
transmitting an address configuration command by the master device (Master);
receiving the address configuration command by at least first chip (IC(1,1), IC(2,1), IC(3,1), IC(4,1)) in each communication channel (1~4) to enter an address configuration time interval;
in the address configuration time interval, encoding a column address of the chip by the at least one first chip (IC(1,1), IC(2,1), IC(3,1),IC(4,1)) in each communication channel according to level information of each addressing pin (ADDR) of the chip, wherein connections of the addressing pin (ADDR) in the chip (IC(1,1)~IC(4,n) comprises one of floating, coupling with the communication input pin (SDI) of the chip (IC(1,1)~IC(4,n) and coupling with the communication output pin (SDO) of the chip (IC(1,1)~IC(4,n), and wherein the addressing pins (ADDR) of the at least one first chip (IC(1,1), IC(2,1), IC(3,1),IC(4,1)) in each communication channel (1~4) perform different connections so that level information of the addressing pin (ADDR) of the at least first chip (IC(1,1), IC(2,1), IC(3,1),IC(4,1)) in each communication channel (1~4) corresponds to one column address of the corresponding communication channel (1~4); and
transmitting a communication data packet and identifying each communication channel (1~4) according to the column address of the at least one first chip (IC(1,1), IC(2,1), IC(3,1), IC(4,1)) in each communication channel (1~4) by the master device (Master), wherein the master device and the at least two chips in each communication channels are connected in series by a one-wire communication.

15. The communication method according to claim 14, wherein the connections of the addressing pin of the chip (IC(1,1)~IC(4,n)) comprises at least three of coupling with a power supply terminal (VDD), coupling with a ground terminal (GND), coupling with the communication input pin (SDI) of the chip (IC(1,1)~IC(4,n)), coupling with the communication output pin (SDO) of the chip (IC(1,1)~IC(4,n)), and floating.

16. The communication method according to claim 14 or claim 15, wherein the addressing pins (ADDR) of the all chips (IC(1,1)~IC(4,n)) in the same communication channel (1~4) perform same connection, and the addressing pins (ADDR) of the chip (IC(1,1)~IC(4,n)) in the different communication channels (1~4) perform different connections.

17. The communication method according to claim 14 or claim 15, wherein the addressing pins (ADDR) of the first chips (IC(1,1), IC(2,1), IC(3,1), IC(4,1)) in the different communication channels (1~4) perform different connections, and the addressing pins (ADDR) of a second chip (IC(1,2), IC(2,2), IC(3,2), IC(4,2)) to a last chip (IC(1,n), IC(2,n), IC(3,n), IC(4,n)) in the all communication channels (1~4) perform same connection.

18. The communication method according to claim 14 or claim 15, wherein the addressing pins (ADDR) of the first chips (IC(1,1), IC(2,1), IC(3,1), IC(4,1)) in the different communication channels (1~4) perform different connections, and the addressing pins (ADDR) of a second chip (IC(1,2), IC(2,2), IC(3,2), IC(4,2)) to a last chip (IC(1,n), IC(2,n), IC(3,n), IC(4,n)) in the all communication channels (1~4) perform arbitrary connections.

19. The communication method according to any one claim 14 to claim 16, wherein the communication method further comprises:
transmitting a communication data packet comprising column address data and row address data by the master device (Master), wherein each chip in the communication channel (1~4) when receiving the communication data packet serves as a current chip;
receiving the communication data packet from the master device (Master) or a previous chip and respectively comparing the column address data and the row address data in the communication data packet received by the current chip with the column address and a row address of the current chip by the current chip in each communication channel (1~4);
when the column address data and the row address data are respectively consistent with the column address and the row address, regarding the current chip as a target chip in the communication and implementing corresponding commands in the communication data packet by the target chip;
when the column address data is inconsistent with the column address and/or the row address data is inconsistent with the row address, forwarding the communication data packet received by the current chip to a next chip by the current chip, wherein the current chip does not modify the column address data in the communication data packet received by the current chip.

20. The communication method according to claim 14, 15 or 17, wherein the communication method further comprises:
transmitting a communication data packet comprising column address data and row address data by the master device (Master), wherein each chip in the communication channel when receiving the communication data packet serves as a current chip;
receiving the communication data packet from the master device (Master) or a previous chip and respectively comparing the column address data and the row address data in the communication data packet received by the current chip with the column address and a row address of the current chip by the current chip in each communication channel (1~4);
when the column address data and the row address data are respectively consistent with the column address and the row address, regarding the current chip as a target chip in the communication and implementing corresponding commands in the communication data packet by the target chip;
when the column address data is inconsistent with the column address and/or the row address data is inconsistent with the row address, modifying the column address data in the communication data packet received by the current chip and forwarding the modified communication data packet to a next chip by the current chip.

21. The communication method according to claim 20, wherein when coding of the column addresses the second chip (IC(1,2), IC(2,2), IC(3,2), IC(4,2)) to the last chip (IC(1,n), IC(2,n), IC(3,n), IC(4,n)) in the all communication channels (1~4) are 0, a calculation method of modifying the column address data performed by the current chip comprises: subtracting the column address of the current chip from the column address data in the communication data packet received by the current chip or subtracting the column address data in the communication data packet received by the current chip from the column address of the current chip by the current chip or performing XOR on the column address data in the communication data packet received by the current chip and the column address of the current chip by the current chip.

22. The communication method according to any one of claim 14 to claim 18, wherein the communication method further comprises:
transmitting a communication data packet comprising column address data and row address data by the master device (Master);
receiving the communication data packet transmitted by the master device (Master) and comparing the column address data in the communication data packet with the column address of the first chip (IC(1,1), IC(2,1), IC(3,1), IC(4,1)) by the first chip (IC(1,1), IC(2,1), IC(3,1), IC(4,1)) in each communication channel (1~4), wherein the communication channel (1~4) serves as a current communication channel when the first chip (IC(1,1), IC(2,1), IC(3,1), IC(4,1)) of the communication channel (1~4) receives the communication data packet;
when the column address data is consistent with the column address, regarding the current communication channel as a target communication channel in the communication, and performing the row address addressing on the chips in the target communication channel according to the row address data in the communication data packet by the first chip (IC(1,1), IC(2,1), IC(3,1), IC(4,1));
when the column address data is inconsistent with the column address, not regarding the current communication channel as the target communication channel in the communication and not forwarding the communication data packet to the next chip by the first chip (IC(1,1), IC(2,1), IC(3,1), IC(4,1)) in the current communication channel.

23. The communication method according to any one of claim 14 to claim 22, wherein the communication method further comprises: in the address configuration time interval, receiving a PWM signal by the communication input pin (SDI) or the communication output pin (SDO) of the chip (IC(1,1)~IC(4,n)) to identify the connection that the addressing pin (ADDR) is coupled with the communication input pin (SDI) or the communication output pin (SDO).

## Patentansprüche

1. Ein Kommunikationssystem, wobei das Kommunikationssystem umfasst:
mindestens zwei Kommunikationskanäle (1~4), von denen jeder mindestens zwei in Reihe gekoppelte Chips (IC(1,1)-IC(4,n)) aufweist, wobei jeder Chip (IC(1,1)~IC(4,n)) einen Kommunikationseingangspin (SDI), einen Kommunikationsausgangspin (SDO) und mindestens einen Adressierungspin (ADDR) aufweist, und Verbindungen des Adressierungspins (ADDR) in dem Chip (IC(1,1)-IC(4,n)) eines aus dem Folgenden aufweisen: schwebend, Kopplung mit dem Kommunikationseingangspin (SDI) des Chips (IC(1,1)~IC(4,n)) und Kopplung mit dem Kommunikationsausgangspin (SDO) des Chips (IC(1,1)~IC(4,n)); und
eine Master-Vorrichtung (Master), die dazu eingerichtet ist, jeden Kommunikationskanal (1~4) gemäß Pegelinformation jedes Adressierungspins (ADDR) von mindestens einem ersten Chip (IC(1,1), IC(2,1), IC(3,1), IC(4,1)) in jedem Kommunikationskanal (1~4) zu identifizieren, wobei die Adressierungspins des mindestens einen ersten Chips (IC(1,1), IC(2,1), IC(3,1), IC(4,1)) in verschiedenen Kommunikationskanälen (1~4) verschiedene Verbindungen durchführen, sodass jede Verbindung des Adressierungspins (ADDR) des mindestens einen ersten Chips (IC(1,1), IC(2,1), IC(3,1), IC(4,1)) in jedem Kommunikationskanal (1~4) einer Spaltenadresse des entsprechenden Kommunikationskanals (1~4) entspricht, und wobei der erste Chip (IC(1,1), IC(2,1), IC(3,1), IC(4,1)) in jedem Kommunikationskanal (1~4) mit einem entsprechenden Ausgangsport (MDO1~MDO4) der Master-Vorrichtung (Master) verbunden ist, wobei die Master-Vorrichtung und die mindestens zwei Chips in jedem Kommunikationskanal mittels einer Eindraht-Kommunikation in Reihe verbunden sind.

2. Das Kommunikationssystem gemäß Anspruch 1, wobei die Verbindungen des Adressierungspins (ADDR) des Chips (IC(1,1)~IC(4,n)) mindestens drei aus dem Folgenden aufweisen: Kopplung mit einem Energieversorgungsanschluss (VDD), Kopplung mit einem Masseanschluss (GND), Kopplung mit dem Kommunikationseingangspin (SDI) des Chips (IC(1,1)~IC(4,n)), Kopplung mit dem Kommunikationsausgangspin (SDO) des Chips (IC(1,1)~IC(4,n)) und schwebend.

3. Das Kommunikationssystem gemäß Anspruch 1, wobei die Adressierungspins (ADDR) aller Chips (IC(1,1)~IC(4,n)) in demselben Kommunikationskanal (1~4) dieselbe Verbindung durchführen, und die Adressierungspins (ADDR) der Chips (IC(1,1)-IC(4,n)) in den verschiedenen Kommunikationskanälen (1~4) verschiedene Verbindungen durchführen.

4. Das Kommunikationssystem gemäß Anspruch 1, wobei die Adressierungspins (ADDR) der ersten Chips (IC(1,1), IC(2,1), IC(3,1), IC(4,1)) in den verschiedenen Kommunikationskanälen (1~4) verschiedene Verbindungen durchführen.

5. Das Kommunikationssystem gemäß Anspruch 4, wobei die Adressierungspins (ADDR) von einem zweiten Chip (IC(1,2), IC(2,2), IC(3,2), IC(4,2)) bis zu einem letzten Chip (IC(1,n), IC(2,n), IC(3,n), IC(4,n)) in den allen Kommunikationskanälen (1~4) dieselbe Verbindung durchführen.

6. Das Kommunikationssystem gemäß Anspruch 4, wobei die Adressierungspins (ADDR) von einem zweiten Chip (IC(1,2), IC(2,2), IC(3,2), IC(4,2)) bis zu einem letzten Chip (IC(1,n), IC(2,n), IC(3,n), IC(4,n)) in den allen Kommunikationskanälen (1~4) beliebige Verbindungen ausführen.

7. Das Kommunikationssystem gemäß einem der Ansprüche 1 bis 5, wobei das Kommunikationssystem ferner aufweist:
die Master-Vorrichtung (Master) überträgt einen Adresskonfigurationsbefehl, und jeder Chip (IC(1,1)~IC(4,n)) in dem Kommunikationskanal (1~4), wenn er den Adresskonfigurationsbefehl empfängt, dient als aktueller Chip;
in jedem Kommunikationskanal (1~4) empfängt der aktuelle Chip den Adresskonfigurationsbefehl von der Master-Vorrichtung (Master) oder einem vorherigen Chip, um in ein Adresskonfigurationszeitintervall einzutreten, und überträgt den Adresskonfigurationsbefehl zu einem nächsten Chip;
jeder Chip (IC(1,1)~1C(4,n)) in dem Adresskonfigurationszeitintervall erhält eine Spaltenadresse des Chips gemäß der Verbindung jedes Adressierungspins (ADDR) des Chips (IC(1,1)~1C(4,n)).

8. Das Kommunikationssystem gemäß einem der Ansprüche 1 bis 6, wobei das Kommunikationssystem ferner aufweist:
die Master-Vorrichtung (Master) überträgt einen Adresskonfigurationsbefehl;
der erste Chip (IC(1,1), IC(2,1), IC(3,1), IC(4,1)) in jedem Kommunikationskanal (1~4) empfängt den Adresskonfigurationsbefehl von der Master-Vorrichtung (Master), um in ein Adresskonfigurationszeitintervall einzutreten;
der erste Chip (IC(1,1), IC(2,1), IC(3,1), IC(4,1)) in dem Adresskonfigurationszeitintervall erhält eine Spaltenadresse des ersten Chips gemäß der Verbindung jedes Adressierungspins des ersten Chips (IC(1,1), IC(2,1), IC(3,1), IC(4,1)).

9. Das Kommunikationssystem gemäß einem der Ansprüche 3, 7 und 8, wobei das Kommunikationssystem ferner aufweist:
die Master-Vorrichtung (Master) überträgt ein Kommunikationsdatenpaket, das Spaltenadressdaten und Zeilenadressdaten aufweist, und jeder Chip (IC(1,1)-IC(4,n)) in dem Kommunikationskanal (1~4), wenn er das Kommunikationsdatenpaket empfängt, dient als aktueller Chip;
in jedem Kommunikationskanal (1~4) empfängt der aktuelle Chip das Kommunikationsdatenpaket von der Master-Vorrichtung (Master) oder einem vorherigen Chip, und vergleicht jeweils die Spaltenadressdaten und die Zeilenadressdaten in dem von dem aktuellen Chip empfangenen Kommunikationsdatenpaket mit der Spaltenadresse und einer Zeilenadresse des aktuellen Chips;
wenn die Spaltenadressdaten und die Zeilenadressdaten jeweils mit der Spaltenadresse und der Zeilenadresse vereinbar sind, dient der aktuelle Chip als Ziel-Chip in der Kommunikation und implementiert entsprechende Befehle in dem Kommunikationsdatenpaket;
wenn die Spaltenadressdaten nicht mit der Spaltenadresse vereinbar sind und/oder die Zeilenadressdaten nicht mit der Zeilenadresse vereinbar sind, leitet der aktuelle Chip das von dem aktuellen Chip empfangene Kommunikationsdatenpaket zu einem nächsten Chip weiter, wobei der aktuelle Chip die Spaltenadressdaten in dem von dem aktuellen Chip empfangenen Kommunikationsdatenpaket nicht modifiziert.

10. Das Kommunikationssystem nach einem der Ansprüche 5, 7 und 8, wobei das Kommunikationssystem ferner aufweist:
die Master-Vorrichtung (Master) überträgt ein Kommunikationsdatenpaket, das Spaltenadressdaten und Zeilenadressdaten aufweist, und jeder Chip (IC(1,1)~IC(4,n) in dem Kommunikationskanal (1~4), wenn er das Kommunikationsdatenpaket empfängt, dient als aktueller Chip;
in jedem Kommunikationskanal (1~4) empfängt der aktuelle Chip das Kommunikationsdatenpaket von der Master-Vorrichtung (Master) oder einem vorherigen Chip, und vergleicht jeweils die Spaltenadressdaten und die Zeilenadressdaten in dem von dem aktuellen Chip empfangenen Kommunikationsdatenpaket mit der Spaltenadresse und einer Zeilenadresse des aktuellen Chips;
wenn die Spaltenadressdaten und die Zeilenadressdaten jeweils mit der Spaltenadresse und der Zeilenadresse vereinbar sind, dient der aktuelle Chip als Ziel-Chip in der Kommunikation und implementiert entsprechende Befehle in dem Kommunikationsdatenpaket;
wenn die Spaltenadressdaten nicht mit der Spaltenadresse vereinbar sind und/oder die Zeilenadressdaten nicht mit der Zeilenadresse vereinbar sind, modifiziert der aktuelle Chip die Spaltenadressdaten in dem von dem aktuellen Chip empfangenen Kommunikationsdatenpaket und leitet das modifizierte Kommunikationsdatenpaket zu einem nächsten Chip weiter.

11. Das Kommunikationssystem gemäß Anspruch 10, wobei, wenn eine Kodierung der Spaltenadressen des zweiten Chips (IC(1,2), IC(2,2), IC(3,2), IC(4,2)) bis zu dem letzten Chip (IC(1,n), IC(2,n), IC(3,n), IC(4,n)) in den allen Kommunikationskanälen (1~4) 0 ist, ein Berechnungsverfahren zum Modifizieren der Spaltenadressdaten, das mittels des aktuellen Chips durchgeführt wird, aufweist: der aktuelle Chip subtrahiert die Spaltenadresse des aktuellen Chips von den Spaltenadressdaten in dem von dem aktuellen Chip empfangenen Kommunikationsdatenpaket, oder der aktuelle Chip subtrahiert die Spaltenadressdaten in dem von dem aktuellen Chip empfangenen Kommunikationsdatenpaket von der Spaltenadresse des aktuellen Chips.

12. Das Kommunikationssystem gemäß Anspruch 10, wobei, wenn eine Kodierung der Spaltenadressen des zweiten Chips (IC(1,2), 1C(2,2), IC(3,2), 1C(4,2)) bis zu dem letzten Chip (IC(1,n), IC(2,n), IC(3,n), IC(4,n)) in den allen Kommunikationskanälen (1~4) 0 ist, ein Berechnungsverfahren zum Modifizieren der Spaltenadressdaten, das mittels des aktuellen Chips durchgeführt wird, aufweist: der aktuelle Chip führt eine XOR-Operation an den Spaltenadressdaten in dem von dem aktuellen Chip empfangenen Kommunikationsdatenpaket und der Spaltenadresse des aktuellen Chips durch.

13. Das Kommunikationssystem gemäß einem der Ansprüche 3 bis 8, wobei das Kommunikationssystem ferner umfasst:
die Master-Vorrichtung (Master) überträgt ein Kommunikationsdatenpaket, das Spaltenadressdaten und Zeilenadressdaten aufweist;
der erste Chip (IC(1,1), IC(2,1), IC(3,1), IC(4,1)) in jedem Kommunikationskanal (1~4) empfängt das von der Master-Vorrichtung (Master) übertragene Kommunikationsdatenpaket, und vergleicht die Spaltenadressdaten in dem Kommunikationsdatenpaket mit der Spaltenadresse des ersten Chips (IC(1,1), IC(2,1), IC(3,1), IC(4,1)), wobei der Kommunikationskanal (1~4) als aktueller Kommunikationskanal dient, wenn der erste Chip des Kommunikationskanals das Kommunikationsdatenpaket empfängt;
wenn die Spaltenadressdaten mit der Spaltenadresse vereinbar sind, dient der aktuelle Kommunikationskanal als Ziel-Kommunikationskanal in der Kommunikation, und eine Adressierung der Zeilenadresse wird an den Chips in dem Ziel-Kommunikationskanal gemäß den Zeilenadressdaten in dem Kommunikationsdatenpaket durchgeführt;
wenn die Spaltenadressdaten nicht mit der Spaltenadresse vereinbar sind, dient der aktuelle Kommunikationskanal nicht als Ziel-Kommunikationskanal in der Kommunikation, und der erste Chip (IC(1,1), IC(2,1), IC(3,1), IC(4,1)) in dem aktuellen Kommunikationskanal leitet das Kommunikationsdatenpaket nicht zu dem nächsten Chip weiter.

14. Ein Kommunikationsverfahren für ein Kommunikationssystem, das eine Master-Vorrichtung (Master) und mindestens zwei Kommunikationskanäle (1~4) aufweist, wobei jeder Kanal (1~4) mindestens zwei in Reihe gekoppelte Chips (IC(1,1)~IC(4,n) aufweist, und jeder Chip (IC(1,1)~IC(4,n) einen Kommunikationseingangspin (SDI), einen Kommunikationsausgangspin (SDO) und mindestens einen Adressierungspin (ADDR) aufweist, wobei der erste Chip (IC(1,1), IC(2,1), IC(3,1), IC(4,1)) in jedem Kommunikationskanal (1~4) mit einem entsprechenden Ausgangsport (MDO1~MDO04) der Master-Vorrichtung (Master) verbunden ist, wobei das Kommunikationsverfahren umfasst:
Übertragen eines Adresskonfigurationsbefehls mittels der Master-Vorrichtung (Master);
Empfangen des Adresskonfigurationsbefehls mittels mindestens eines ersten Chips (IC(1,1), IC(2,1), IC(3,1), IC(4,1)) in jedem Kommunikationskanal (1~4), um in ein Adresskonfigurationszeitintervall einzutreten;
in dem Adresskonfigurationszeitintervall, Kodieren einer Spaltenadresse des Chips mittels des mindestens einen ersten Chips (IC(1,1), IC(2,1), IC(3,1), IC(4,1)) in jedem Kommunikationskanal gemäß einer Pegelinformation jedes Adressierungspins (ADDR) des Chips, wobei Verbindungen des Adressierungspins (ADDR) in dem Chip (IC(1,1)~IC(4,n) eines aus dem Folgenden aufweisen: schwebend, Kopplung mit dem Kommunikationseingangspin (SDI) des Chips (IC(1,1)~IC(4,n) und Kopplung mit dem Kommunikationsausgangspin (SDO) des Chips (IC(1,1)~IC(4,n), und wobei die Adressierungspins (ADDR) des mindestens einen ersten Chips (IC(1,1), IC(2,1), IC(3,1), IC(4,1)) in jedem Kommunikationskanal (1~4) verschiedene Verbindungen durchführen, sodass eine Pegelinformation des Adressierungspins (ADDR) des mindestens einen ersten Chips (IC(1,1), IC(2,1), IC(3,1), IC(4,1)) in jedem Kommunikationskanal (1~4) einer Spaltenadresse des entsprechenden Kommunikationskanals (1~4) entspricht, und
Übertragen eines Kommunikationsdatenpakets und Identifizieren jedes Kommunikationskanals (1~4) gemäß der Spaltenadresse des mindestens einen ersten Chips (IC(1,1), IC(2,1), IC(3,1), IC(4,1)) in jedem Kommunikationskanal (1~4) mittels der Master-Vorrichtung (Master), wobei die Master-Vorrichtung und die mindestens zwei Chips in jedem Kommunikationskanal mittels einer Eindraht-Kommunikation in Reihe verbunden sind.

15. Das Kommunikationsverfahren gemäß Anspruch 14, wobei die Verbindungen des Adressierungspins des Chips (IC(1,1)~IC(4,n)) mindestens drei aus dem Folgenden aufweisen: Kopplung mit einem Energieversorgungsanschluss (VDD), Kopplung mit einem Masseanschluss (GND), Kopplung mit dem Kommunikationseingangspin (SDI) des Chips (IC(1,1)~IC(4,n)), Kopplung mit dem Kommunikationsausgangspin (SDO) des Chips (IC(1,1)~IC(4,n)) und schwebend.

16. Das Kommunikationsverfahren gemäß Anspruch 14 oder Anspruch 15, wobei die Adressierungspins (ADDR) der allen Chips (IC(1,1)~IC(4,n)) in demselben Kommunikationskanal (1~4) dieselbe Verbindung durchführen, und die Adressierungspins (ADDR) des Chips (IC(1,1)~IC(4,n)) in den verschiedenen Kommunikationskanälen (1~4) verschiedene Verbindungen durchführen.

17. Das Kommunikationsverfahren gemäß Anspruch 14 oder Anspruch 15, wobei die Adressierungspins (ADDR) der ersten Chips (IC(1,1), IC(2,1), IC(3,1), IC(4,1)) in den verschiedenen Kommunikationskanälen (1~4) verschiedene Verbindungen durchführen, und die Adressierungspins (ADDR) von einem zweiten Chip (IC(1,2), IC(2,2), IC(3,2), IC(4,2)) bis zu einem letzten Chip (IC(1,n), IC(2,n), IC(3,n), IC(4,n)) in den allen Kommunikationskanälen (1~4) dieselbe Verbindung ausführen.

18. Das Kommunikationsverfahren gemäß Anspruch 14 oder Anspruch 15, wobei die Adressierungspins (ADDR) der ersten Chips (IC(1,1), IC(2,1), IC(3,1), IC(4,1)) in den verschiedenen Kommunikationskanälen (1~4) verschiedene Verbindungen durchführen, und die Adressierungspins (ADDR) von einem zweiten Chip (IC(1,2), IC(2,2), IC(3,2), IC(4,2)) bis zu einem letzten Chip (IC(1,n), IC(2,n), IC(3,n), IC(4,n)) in den allen Kommunikationskanälen (1~4) beliebige Verbindungen durchführen.

19. Das Kommunikationsverfahren gemäß einem der Ansprüche 14 bis 16, wobei das Kommunikationsverfahren ferner umfasst:
Übertragen eines Kommunikationsdatenpakets, das Spaltenadressdaten und Zeilenadressdaten aufweist, mittels der Master-Vorrichtung (Master), wobei jeder Chip in dem Kommunikationskanal (1~4), der das Kommunikationsdatenpaket empfängt, als aktueller Chip dient;
Empfangen des Kommunikationsdatenpakets von der Master-Vorrichtung (Master) oder einem vorherigen Chip und jeweiliges Vergleichen der Spaltenadressdaten und der Zeilenadressdaten in dem von dem aktuellen Chip empfangenen Kommunikationsdatenpaket mit der Spaltenadresse und einer Zeilenadresse des aktuellen Chips mittels des aktuellen Chips in jedem Kommunikationskanal (1~4);
wenn die Spaltenadressdaten und die Zeilenadressdaten jeweils mit der Spaltenadresse und der Zeilenadresse vereinbar sind, Berücksichtigen des aktuellen Chips als Ziel-Chip in der Kommunikation und Implementieren entsprechender Befehle in dem Kommunikationsdatenpaket mittels des Ziel-Chips;
wenn die Spaltenadressdaten nicht mit der Spaltenadresse vereinbar sind und/oder die Zeilenadressdaten nicht mit der Zeilenadresse vereinbar sind, Weiterleiten des von dem aktuellen Chip empfangenen Kommunikationsdatenpakets zu einem nächsten Chip mittels des aktuellen Chips, wobei der aktuelle Chip die Spaltenadressdaten in dem von dem aktuellen Chip empfangenen Kommunikationsdatenpaket nicht modifiziert.

20. Das Kommunikationsverfahren gemäß Anspruch 14, 15 oder 17, wobei das Kommunikationsverfahren ferner umfasst:
Übertragen eines Kommunikationsdatenpakets, das Spaltenadressdaten und Zeilenadressdaten aufweist, mittels der Master-Vorrichtung (Master), wobei jeder Chip in dem Kommunikationskanal, der das Kommunikationsdatenpaket empfängt, als aktueller Chip dient;
Empfangen des Kommunikationsdatenpakets von der Master-Vorrichtung (Master) oder einem vorherigen Chip und jeweiliges Vergleichen der Spaltenadressdaten und der Zeilenadressdaten in dem von dem aktuellen Chip empfangenen Kommunikationsdatenpaket mit der Spaltenadresse und einer Zeilenadresse des aktuellen Chips mittels des aktuellen Chips in jedem Kommunikationskanal (1~4);
wenn die Spaltenadressdaten und die Zeilenadressdaten jeweils mit der Spaltenadresse und der Zeilenadresse vereinbar sind, Berücksichtigen des aktuellen Chips als Ziel-Chip in der Kommunikation und Implementieren entsprechender Befehle in dem Kommunikationsdatenpaket mittels des Ziel-Chips;
wenn die Spaltenadressdaten nicht mit der Spaltenadresse vereinbar sind und/oder die Zeilenadressdaten nicht mit der Zeilenadresse vereinbar sind, Modifizieren der Spaltenadressdaten in dem mittels des aktuellen Chips empfangenen Kommunikationsdatenpaket und Weiterleiten des modifizierten Kommunikationsdatenpakets zu einem nächsten Chip mittels des aktuellen Chips.

21. Das Kommunikationsverfahren gemäß Anspruch 20, wobei, wenn eine Kodierung der Spaltenadressen des zweiten Chips (IC(1,2), IC(2,2), IC(3,2), IC(4,2)) bis zu dem letzten Chip (IC(1,n), IC(2,n), IC(3,n), IC(4,n)) in den allen Kommunikationskanälen (1~4) 0 ist, ein Berechnungsverfahren zum Modifizieren der Spaltenadressdaten, das mittels des aktuellen Chips durchgeführt wird, umfasst: Subtrahieren der Spaltenadresse des aktuellen Chips von den Spaltenadressdaten in dem von dem aktuellen Chip empfangenen Kommunikationsdatenpaket oder Subtrahieren der Spaltenadressdaten in dem von dem aktuellen Chip empfangenen Kommunikationsdatenpaket von der Spaltenadresse des aktuellen Chips mittels des aktuellen Chips oder Durchführen einer XOR-Operation an den Spaltenadressdaten in dem von dem aktuellen Chip empfangenen Kommunikationsdatenpaket und der Spaltenadresse des aktuellen Chips mittels des aktuellen Chips.

22. Das Kommunikationsverfahren nach einem der Ansprüche 14 bis 18, wobei das Kommunikationsverfahren ferner umfasst:
Übertragen eines Kommunikationsdatenpakets, das Spaltenadressdaten und Zeilenadressdaten aufweist, mittels der Master-Vorrichtung (Master);
Empfangen des von der Master-Vorrichtung (Master) übertragenen Kommunikationsdatenpakets und Vergleichen der Spaltenadressdaten in dem Kommunikationsdatenpaket mit der Spaltenadresse des ersten Chips (IC(1,1), IC(2,1), IC(3,1), IC(4,1)) mittels des ersten Chips (IC(1,1), IC(2,1), IC(3,1), IC(4,1)) in jedem Kommunikationskanal (1-4), wobei der Kommunikationskanal (1~4) als aktueller Kommunikationskanal dient, wenn der erste Chip (IC(1,1), IC(2,1), IC(3,1), IC(4,1)) des Kommunikationskanals (1~4) das Kommunikationsdatenpaket empfängt;
wenn die Spaltenadressdaten mit der Spaltenadresse vereinbar sind, Berücksichtigen des aktuellen Kommunikationskanals als ein Ziel-Kommunikationskanal in der Kommunikation, und Durchführen der Zeilenadress-Adressierung an den Chips in dem Ziel-Kommunikationskanal gemäß den Zeilenadressdaten in dem Kommunikationsdatenpaket mittels des ersten Chips (IC(1,1), IC(2,1), IC(3,1), IC(4,1));
wenn die Spaltenadressdaten nicht mit der Spaltenadresse vereinbar sind, Nicht-Berücksichtigen des aktuellen Kommunikationskanals als der Ziel-Kommunikationskanal in der Kommunikation und Nicht-Weiterleiten des Kommunikationsdatenpakets zu dem nächsten Chip mittels des ersten Chips (IC(1,1), IC(2,1), IC(3,1), IC(4,1)) in dem aktuellen Kommunikationskanal.

23. Das Kommunikationsverfahren nach einem der Ansprüche 14 bis 22, wobei das Kommunikationsverfahren ferner umfasst: in dem Adresskonfigurationszeitintervall, Empfangen eines PWM-Signals mittels des Kommunikationseingangspins (SDI) oder des Kommunikationsausgangspins (SDO) des Chips (IC(1,1)-1C(4,n)), um die Verbindung zu identifizieren, dass der Adressierungspin (ADDR) mit dem Kommunikationseingangspin (SDI) oder dem Kommunikationsausgangspin (SDO) gekoppelt ist.

## Revendications

1. Système de communication, le système de communication comprenant :
au moins deux canaux de communication (1~4), dont chacun comprend au moins deux puces (IC(1,1)~IC(4,n)) couplées en série, dans lequel chaque puce (IC(1,1)~IC(4,n)) comprend une broche d'entrée de communication (SDI), une broche de sortie de communication (SDO) et au moins une broche d'adressage (ADDR), et des connexions de la broche d'adressage (ADDR) dans la puce (IC(1,1)~IC(4,n)) comprennent l'un parmi : un flottement, un couplage à la broche d'entrée de communication (SDI) de la puce (IC(1,1)~IC(4,n)) et un couplage à la broche de sortie de communication (SDO) de la puce (IC(1,1)~IC(4,n)) ; et
un dispositif maître (Master), configuré pour identifier chaque canal de communication (1~4) en fonction d'informations de niveau de chaque broche d'adressage (ADDR) d'au moins une première puce (IC(1,1), IC(2,1), IC(3,1), IC(4,1)) dans chaque canal de communication (1~4), dans lequel les broches d'adressage de ladite au moins une première puce (IC(1,1), IC(2,1), IC(3,1), IC(4,1)) dans différents canaux de communication (1~4) effectuent des connexions différentes de sorte que chaque connexion de la broche d'adressage (ADDR) de ladite au moins première puce (IC(1,1), IC(2,1), IC(3,1), IC(4,1)) dans chaque canal de communication (1~4) corresponde à une adresse de colonne du canal de communication correspondant (1~4), et dans lequel la première puce (IC(1,1), IC(2,1), IC(3,1), IC(4,1)) dans chaque canal de communication (1~4) est connectée à un port de sortie correspondant (MDO1∼MDO4) du dispositif maître (Master), dans lequel le dispositif maître et les au moins deux puces dans chaque canal de communication sont connectés en série par une communication à un fil.

2. Système de communication selon la revendication 1, dans lequel les connexions de la broche d'adressage (ADDR) de la puce (IC(1,1) ∼IC(4,n)) comprennent au moins trois parmi un couplage avec une borne d'alimentation en puissance (VDD), un couplage avec une borne de masse (GND), un couplage avec la broche d'entrée de communication (SDI) de la puce (IC(1,1)~IC(4,n)), un couplage avec la broche de sortie de communication (SDO) de la puce (IC(1,1)~IC(4,n)), et un flottement.

3. Système de communication selon la revendication 1, dans lequel les broches d'adressage (ADDR) de toutes les puces (IC(1,1)~IC(4,n)) dans le même canal de communication (1~4) effectuent la même connexion, et les broches d'adressage (ADDR) des puces (IC(1,1)∼IC(4,n)) dans les différents canaux de communication (1~4) effectuent des connexions différentes.

4. Système de communication selon la revendication 1, dans lequel les broches d'adressage (ADDR) des premières puces (IC(1,1), IC(2,1), IC(3,1), IC(4,1)) dans les différents canaux de communication (1~4) effectuent des connexions différentes.

5. Système de communication selon la revendication 4, dans lequel les broches d'adressage (ADDR) d'une deuxième puce (IC(1,2), IC(2,2), IC(3,2), IC(4,2)) vers une dernière puce (IC(1,n), IC(2,n), IC(3,n), IC(4,n)) dans tous les canaux de communication (1~4) effectuent la même connexion.

6. Système de communication selon la revendication 4, dans lequel les broches d'adressage (ADDR) d'une deuxième puce (IC(1,2), IC(2,2), IC(3,2), IC(4,2)) vers une dernière puce (IC(1,n), IC(2,n), IC(3,n), IC(4,n)) dans tous les canaux de communication (1~4) effectuent des connexions arbitraires.

7. Système de communication selon l'une quelconque des revendications 1 à 5, dans lequel le système de communication comprend en outre :
le dispositif maître (Master) transmet une commande de configuration d'adresse, et chaque puce (IC(1,1)~IC(4,n)) dans le canal de communication (1~4) lorsqu'elle reçoit la commande de configuration d'adresse sert de puce actuelle ;
dans chaque canal de communication (1~4), la puce actuelle reçoit la commande de configuration d'adresse du dispositif maître (Master) ou d'une puce précédente pour entrer dans un intervalle de temps de configuration d'adresse, et transmet la commande de configuration d'adresse à une puce suivante ;
chaque puce (IC(1,1)~1C(4,n)) dans l'intervalle de temps de configuration d'adresse obtient une adresse de colonne de la puce en fonction de la connexion de chaque broche d'adressage (ADDR) de la puce (IC(1,1)~IC(4,n)).

8. Système de communication selon l'une quelconque des revendications 1 à 6, dans lequel le système de communication comprend en outre :
le dispositif maître (Master) transmet une commande de configuration d'adresse ;
la première puce (IC(1,1), IC(2,1), IC(3,1), IC(4,1)) dans chaque canal de communication (1~4) reçoit la commande de configuration d'adresse provenant du dispositif maître (Master) pour entrer dans un intervalle de temps de configuration d'adresse ;
la première puce (IC(1,1), IC(2,1), IC(3,1), IC(4,1)) dans l'intervalle de temps de configuration d'adresse obtient une adresse de colonne de la première puce en fonction de la connexion de chaque broche d'adressage de la première puce (IC(1,1), IC(2,1), IC(3,1), IC(4,1)).

9. Système de communication selon l'une quelconque des revendications 3, 7 et 8, dans lequel le système de communication comprend en outre :
le dispositif maître (Master) transmet un paquet de données de communication comprenant des données d'adresse de colonne et des données d'adresse de ligne, et chaque puce (IC(1,1)~IC(4,n)) dans le canal de communication (1~4) lorsqu'elle reçoit le paquet de données de communication sert de puce actuelle ;
dans chaque canal de communication (1~4), la puce actuelle reçoit le paquet de données de communication provenant du dispositif maître (Master) ou d'une puce précédente, et compare respectivement les données d'adresse de colonne et les données d'adresse de ligne dans le paquet de données de communication reçu par la puce actuelle avec l'adresse de colonne et une adresse de ligne de la puce actuelle ;
lorsque les données d'adresse de colonne et les données d'adresse de ligne sont respectivement cohérentes avec l'adresse de colonne et l'adresse de ligne, la puce actuelle sert de puce cible dans la communication et met en œuvre des commandes correspondantes dans le paquet de données de communication ;
lorsque les données d'adresse de colonne ne correspondent pas à l'adresse de colonne et/ou lorsque les données d'adresse de ligne ne correspondent pas à l'adresse de ligne, la puce actuelle transmet le paquet de données de communication reçu par la puce actuelle à une puce suivante, la puce actuelle ne modifiant pas les données d'adresse de colonne dans le paquet de données de communication reçu par la puce actuelle.

10. Système de communication selon l'une quelconque des revendications 5, 7 et 8, dans lequel le système de communication comprend en outre :
le dispositif maître (Master) transmet un paquet de données de communication comprenant des données d'adresse de colonne et des données d'adresse de ligne, et chaque puce (IC(1,1)~IC(4,n) dans le canal de communication (1~4) lorsqu'elle reçoit le paquet de données de communication sert de puce actuelle ;
dans chaque canal de communication (1~4), la puce actuelle reçoit le paquet de données de communication provenant du dispositif maître (Master) ou d'une puce précédente, et compare respectivement les données d'adresse de colonne et les données d'adresse de ligne dans le paquet de données de communication reçu par la puce actuelle avec l'adresse de colonne et une adresse de ligne de la puce actuelle ;
lorsque les données d'adresse de colonne et les données d'adresse de ligne sont respectivement cohérentes avec l'adresse de colonne et l'adresse de ligne, la puce actuelle sert de puce cible dans la communication et met en œuvre des commandes correspondantes dans le paquet de données de communication ;
lorsque les données d'adresse de colonne ne correspondent pas à l'adresse de colonne et/ou que les données d'adresse de ligne ne correspondent pas à l'adresse de ligne, la puce actuelle modifie les données d'adresse de colonne dans le paquet de données de communication reçu par la puce actuelle et transmet le paquet de données de communication modifié à une puce suivante.

11. Système de communication selon la revendication 10, dans lequel, lorsqu'un codage des adresses de colonne de la deuxième puce (IC(1,2), IC(2,2), IC(3,2), IC(4,2)) vers la dernière puce (IC(1,n), IC(2,n), IC(3,n), IC(4,n)) dans tous les canaux de communication (1~4) est 0, un procédé de calcul de modification des données d'adresse de colonne effectué par la puce actuelle comprend : la puce actuelle soustrait l'adresse de colonne de la puce actuelle des données d'adresse de colonne dans le paquet de données de communication reçu par la puce actuelle, ou la puce actuelle soustrait les données d'adresse de colonne dans le paquet de données de communication reçu par la puce actuelle de l'adresse de colonne de la puce actuelle.

12. Système de communication selon la revendication 10, dans lequel, lorsque le codage des adresses de colonne de la deuxième puce (IC(1,2), 1C(2,2), IC(3,2), 1C(4,2)) vers la dernière puce (IC(1,n), IC(2,n), IC(3,n), IC(4,n)) dans tous les canaux de communication (1~4) est 0, un procédé de calcul de modification des données d'adresse de colonne effectué par la puce actuelle comprend : la puce actuelle effectue une opération XOR sur les données d'adresse de colonne dans le paquet de données de communication reçu par la puce actuelle et l'adresse de colonne de la puce actuelle.

13. Système de communication selon l'une quelconque des revendications 3 à 8, dans lequel le système de communication comprend en outre :
le dispositif maître (Master) transmet un paquet de données de communication comprenant des données d'adresse de colonne et des données d'adresse de ligne ;
la première puce (IC(1,1), IC(2,1), IC(3,1), IC(4,1)) dans chaque canal de communication (1~4) reçoit le paquet de données de communication transmis par le dispositif maître (Master) et compare les données d'adresse de colonne dans le paquet de données de communication avec l'adresse de colonne de la première puce (IC(1,1), IC(2,1), IC(3,1), IC(4,1)), dans lequel le canal de communication (1~4) sert de canal de communication actuel lorsque la première puce du canal de communication reçoit le paquet de données de communication ;
lorsque les données d'adresse de colonne correspondent à l'adresse de colonne, le canal de communication actuel sert de canal de communication cible dans la communication, et l'adressage de l'adresse de ligne est effectué sur les puces du canal de communication cible conformément aux données d'adresse de ligne dans le paquet de données de communication ;
lorsque les données d'adresse de colonne ne correspondent pas à l'adresse de colonne, le canal de communication actuel ne sert pas de canal de communication cible dans la communication, et la première puce (IC(1,1), IC(2,1), IC(3,1), IC(4,1)) dans le canal de communication actuel ne transmet pas le paquet de données de communication à la puce suivante.

14. Procédé de communication pour un système de communication comprenant un dispositif maître (Master) et au moins deux canaux de communication (1-4), dans lequel chaque canal (1~4) comprend au moins deux puces (IC(1,1)~IC(4,n)) couplées en série, et chaque puce (IC(1,1)~IC(4,n)) comprend une broche d'entrée de communication (SDI), une broche de sortie de communication (SDO), et au moins une broche d'adressage (ADDR), dans lequel la première puce (IC(1,1), IC(2,1), IC(3,1), IC(4,1)) dans chaque canal de communication (1~4) est connectée à un port de sortie correspondant (MD01-MD04) du dispositif maître (Master),
le procédé de communication comprenant :
la transmission d'une commande de configuration d'adresse par le dispositif maître (Master) ;
la réception de la commande de configuration d'adresse par au moins une première puce (IC(1,1), IC(2,1), IC(3,1), IC(4,1)) dans chaque canal de communication (1~4) pour entrer dans un intervalle de temps de configuration d'adresse ;
dans l'intervalle de temps de configuration d'adresse, le codage d'une adresse de colonne de la puce par ladite au moins une première puce (IC(1,1), IC (2,1), IC(3,1), IC(4,1)) dans chaque canal de communication en fonction d'informations de niveau de chaque broche d'adressage (ADDR) de la puce, dans lequel des connexions de la broche d'adressage (ADDR) dans la puce (IC(1,1)~IC(4,n)) comprennent l'un parmi : un flottement, un couplage à la broche d'entrée de communication (SDI) de la puce (IC(1,1)~IC(4,n) et un couplage avec la broche de sortie de communication (SDO) de la puce (IC(1,1)~IC(4,n), et dans lequel les broches d'adressage (ADDR) de ladite au moins une première puce (IC(1,1), IC(2,1), IC(3,1),IC(4,1)) dans chaque canal de communication (1~4) effectuent différentes connexions de sorte que des informations de niveau de la broche d'adressage (ADDR) de ladite au moins première puce (IC(1,1), IC(2,1), IC(3,1),IC(4,1)) dans chaque canal de communication (1~4) correspondent à une adresse de colonne du canal de communication correspondant (1~4) ; et
la transmission d'un paquet de données de communication et l'identification de chaque canal de communication (1~4) en fonction de l'adresse de colonne de ladite au moins une première puce (IC(1,1), IC(2,1), IC(3,1), IC(4,1)) dans chaque canal de communication (1~4) par le dispositif maître (Master), dans lequel le dispositif maître et lesdites au moins deux puces dans chaque canal de communication sont connectés en série par une communication à un fil.

15. Procédé de communication selon la revendication 14, dans lequel les connexions de la broche d'adressage de la puce (IC(1,1)~IC(4,n)) comprennent au moins trois parmi un couplage avec une borne d'alimentation en puissance (VDD), un couplage avec une borne de masse (GND), un couplage avec la broche d'entrée de communication (SDI) de la puce (IC (1,1)~IC(4,n)), un couplage avec la broche de sortie de communication (SDO) de la puce (IC(1,1)~IC(4,n)), et un flottement.

16. Procédé de communication selon la revendication 14 ou la revendication 15, dans lequel les broches d'adressage (ADDR) de toutes les puces (IC(1,1)~IC(4,n)) dans le même canal de communication (1~4) effectuent la même connexion, et les broches d'adressage (ADDR) de la puce (IC(1,1)~IC(4,n)) dans les différents canaux de communication (1~4) effectuent des connexions différentes.

17. Procédé de communication selon la revendication 14 ou la revendication 15, dans lequel les broches d'adressage (ADDR) des premières puces (IC(1,1), IC(2,1), IC(3,1), IC(4,1)) dans les différents canaux de communication (1~4) effectuent des connexions différentes, et les broches d'adressage (ADDR) d'une deuxième puce (IC(1,2), IC(2,2), IC(3,2), IC(4,2)) vers une dernière puce (IC(1,n), IC(2,n), IC(3,n), IC(4,n)) dans tous les canaux de communication (1~4) effectuent la même connexion.

18. Procédé de communication selon la revendication 14 ou la revendication 15, dans lequel les broches d'adressage (ADDR) des premières puces (IC(1,1), IC(2,1), IC(3,1), IC(4,1)) dans les différents canaux de communication (1~4) effectuent des connexions différentes, et les broches d'adressage (ADDR) d'une deuxième puce (IC(1,2), IC(2,2), IC(3,2), IC(4,2)) vers une dernière puce (IC(1,n), IC(2,n), IC(3,n), IC(4,n)) dans tous les canaux de communication (1~4) effectuent des connexions arbitraires.

19. Procédé de communication selon l'une quelconque des revendications 14 à 16, dans lequel le procédé de communication comprend en outre :
la transmission d'un paquet de données de communication comprenant des données d'adresse de colonne et des données d'adresse de ligne par le dispositif maître (Master), dans lequel chaque puce dans le canal de communication (1~4) lorsqu'elle reçoit le paquet de données de communication sert de puce actuelle ;
la réception du paquet de données de communication provenant du dispositif maître (Master) ou d'une puce précédente et la comparaison respective des données d'adresse de colonne et des données d'adresse de ligne dans le paquet de données de communication reçu par la puce actuelle avec l'adresse de colonne et une adresse de ligne de la puce actuelle par la puce actuelle dans chaque canal de communication (1-4),
lorsque les données d'adresse de colonne et les données d'adresse de ligne sont respectivement cohérentes avec l'adresse de colonne et l'adresse de ligne, la considération de la puce actuelle comme une puce cible dans la communication et la mise en œuvre de commandes correspondantes dans le paquet de données de communication par la puce cible ;
lorsque les données d'adresse de colonne ne correspondent pas à l'adresse de colonne et/ou que les données d'adresse de ligne ne correspondent pas à l'adresse de ligne, la transmission du paquet de données de communication reçu par la puce actuelle vers une puce suivante par la puce actuelle, dans lequel la puce actuelle ne modifie pas les données d'adresse de colonne dans le paquet de données de communication reçu par la puce actuelle.

20. Procédé de communication selon la revendication 14, 15 ou 17, dans lequel le procédé de communication comprend en outre :
la transmission d'un paquet de données de communication comprenant des données d'adresse de colonne et des données d'adresse de ligne par le dispositif maître (Maître), dans lequel chaque puce dans le canal de communication, lorsqu'elle reçoit le paquet de données de communication, sert de puce actuelle ;
la réception du paquet de données de communication provenant du dispositif maître (Master) ou d'une puce précédente et la comparaison respective des données d'adresse de colonne et des données d'adresse de ligne dans le paquet de données de communication reçu par la puce actuelle avec l'adresse de colonne et une adresse de ligne de la puce actuelle par la puce actuelle dans chaque canal de communication (1~4) ;
lorsque les données d'adresse de colonne et les données d'adresse de ligne sont respectivement cohérentes avec l'adresse de colonne et l'adresse de ligne, la considération de la puce actuelle comme une puce cible dans la communication et la mise en œuvre de commandes correspondantes dans le paquet de données de communication par la puce cible ;
lorsque les données d'adresse de colonne ne correspondent pas à l'adresse de colonne et/ou lorsque les données d'adresse de ligne ne correspondent pas à l'adresse de ligne, la modification des données d'adresse de colonne dans le paquet de données de communication reçu par la puce actuelle et la transmission du paquet de données de communication modifié à une puce suivante par la puce actuelle.

21. Procédé de communication selon la revendication 20, dans lequel, lors d'un codage des adresses de colonne, la deuxième puce (IC(1,2), 1C(2,2), IC(3,2), 1C(4,2)) à la dernière puce (IC(1,n), IC(2,n), IC(3,n), IC(4,n)) dans tous les canaux de communication (1~4) sont 0, un procédé de calcul de modification des données d'adresse de colonne effectué par la puce actuelle comprend : la soustraction de l'adresse de colonne de la puce actuelle des données d'adresse de colonne dans le paquet de données de communication reçu par la puce actuelle ou la soustraction des données d'adresse de colonne dans le paquet de données de communication reçu par la puce actuelle de l'adresse de colonne de la puce actuelle par la puce actuelle ou l'exécution d'une opération XOR sur les données d'adresse de colonne dans le paquet de données de communication reçu par la puce actuelle et l'adresse de colonne de la puce actuelle par la puce actuelle.

22. Procédé de communication selon l'une quelconque des revendications 14 à 18, dans lequel le procédé de communication comprend en outre :
la transmission d'un paquet de données de communication comprenant des données d'adresse de colonne et des données d'adresse de ligne par le dispositif maître (Master) ;
la réception du paquet de données de communication transmis par le dispositif maître (Master) et la comparaison des données d'adresse de colonne dans le paquet de données de communication avec l'adresse de colonne de la première puce (IC(1,1), IC(2,1), IC(3,1), IC(4,1)) par la première puce (IC(1,1), IC(2,1), IC(3,1), IC(4,1)) dans chaque canal de communication (1-4), dans lequel le canal de communication (1~4) sert de canal de communication actuel lorsque la première puce (IC(1,1), IC(2,1), IC(3,1), 1C(4,1)) du canal de communication (1~4) reçoit le paquet de données de communication ;
lorsque les données d'adresse de colonne sont cohérentes avec l'adresse de colonne, la considération du canal de communication actuel comme un canal de communication cible dans la communication, et l'exécution de l'adressage d'adresse de ligne sur les puces dans le canal de communication cible selon les données d'adresse de ligne dans le paquet de données de communication par la première puce (IC(1,1), IC(2,1), IC(3,1), IC(4,1)) ;
lorsque les données d'adresse de colonne ne correspondent pas à l'adresse de colonne, la non considération du canal de communication actuel comme le canal de communication cible dans la communication et la non transmission du paquet de données de communication à la puce suivante par la première puce (IC(1,1), IC(2,1), IC(3,1), IC(4,1)) dans le canal de communication actuel.

23. Procédé de communication selon l'une quelconque des revendications 14 à 22, dans lequel le procédé de communication comprend en outre : dans l'intervalle de temps de configuration d'adresse, la réception d'un signal PWM par la broche d'entrée de communication (SDI) ou la broche de sortie de communication (SDO) de la puce (IC(1,1)~1C(4,n)) afin d'identifier la connexion selon laquelle la broche d'adressage (ADDR) est couplée à la broche d'entrée de communication (SDI) ou à la broche de sortie de communication (SDO) .
